# EUROPÄISCHE PATENTSCHRIFT

(11) **EP 3 298 879 B1**
(45) Veröffentlichungstag und Bekanntmachung des Hinweises auf die Patenterteilung: **18.11.2020**
(21) Anmeldenummer: 17168329.5
(22) Anmeldetag: 27.04.2017
(51) Int. Cl.: A01D 57/20, A01D 41/14

(54) **SCHNEIDWERK**
CUTTING TOOL
BARRE DE COUPE

(30) Priorität: 26.09.2016 DE 102016118174
(43) Veröffentlichungstag der Anmeldung: 28.03.2018
(73) Patentinhaber: CLAAS Selbstfahrende Erntemaschinen GmbH, 33428 Harsewinkel (DE)
(72) Erfinder: Füchtling, Christian, 48317 Drensteinfurt (DE)
(74) Vertreter: CLAAS Gruppe

(56) Entgegenhaltungen:
- US-A- 2 608 041
- US-A- 5 464 371
- US-A- 5 822 959
- US-A1- 2008 295 474
- US-B1- 7 823 372
- US-B2- 6 817 166

## Beschreibung

Die vorliegende Erfindung betrifft ein Schneidwerk, umfassend einen an einem Grundrahmen angeordneten Mittenabschnitt und wenigstens zwei benachbart zu dem Mittenabschnitt angeordnete Seitenabschnitte, einen sich im Wesentlichen über die Breite des Schneidwerkes erstreckenden Messerbalken sowie zumindest eine hinter dem Messerbalken angeordnete Fördervorrichtung, welche von dem Messerbalken abgeschnittenes Erntegut seitwärts in Richtung des Mittenabschnittes transportiert, welcher wenigstens ein quer zur Transportrichtung der Fördervorrichtung förderndes Fördermittel aufweist.

Schneidwerke der eingangs genannten Art sind als sogenannte Bandschneidwerke ausgeführt, welche sich durch ein hohes Maß an Flexibilität bei der Anpassung an eine Bodenkontur einer zu bearbeitenden Fläche auszeichnen. Erreicht wird dies durch den Verzicht auf einen in sich starren Schneidwerkstisch, wie er bei Getreideschneidwerken im Allgemeinen üblich ist. Die Seitenabschnitte weisen jeweils zumindest ein endlos umlaufendes, angetriebenes Förderband auf, welches von einer Vielzahl von um eine Drehachse schwenkbaren Tragarmen des jeweiligen Seitenabschnitts getragen wird. Weiterhin sind Bandschneidwerke bekannt, deren Seitenabschnitte und Messerbalken starr ausgeführt sind. Die jeweiligen Förderbänder transportieren mittels des Messerbalkens abgeerntetes Erntegut in seitlicher Richtung, das heißt quer zur Längsachse des Schneidwerks, hin zum Mittenabschnitt. Der Mittenabschnitt verfügt über wenigstens ein quer zur Transportrichtung der Förderbänder förderndes Fördermittel, welches das seitlich zugeführte Erntegut annimmt und umlenkt. Durch eine in dem Grundrahmen vorgesehene Öffnung im Bereich des Mittenabschnittes wird das Erntegut abgefördert und an eine das Schneidwerk tragende Erntemaschine zur weiteren Bearbeitung übergeben.

Ein gattungsgemäßes Schneidwerk ist aus der US 6,817,166 B2 bekannt. Die US 6,817,166 B2 beschreibt ein Schneidwerk mit einem an einem Grundrahmen angeordneten Mittenabschnitt und wenigstens zwei benachbart zu dem Mittenabschnitt angeordneten Seitenabschnitten. Ein sich im Wesentlichen über die Breite des Schneidwerkes erstreckender Messerbalken dient dem Abernten von Erntegut. Hinter dem Messerbalken ist auf dem jeweiligen Seitenabschnitt eine Fördervorrichtung angeordnet, welche das von dem Messerbalken abgeschnittene Erntegut seitwärts in Richtung des Mittenabschnittes transportiert. Der Mittenabschnitt umfasst ein quer zur Transportrichtung der Fördervorrichtung förderndes Fördermittel, welches als endlos umlaufendes Förderband ausgebildet ist. Die Oberfläche des Förderbandes ist mit einer Vielzahl von in Transport bzw. Förderrichtung gesehen paarweise hintereinander angeordneten Leisten versehen. Die jeweils nebeneinander angeordneten Leisten weisen in Transportrichtung des Förderbandes gesehen eine geringfügige Neigung auf. Dabei ist die Anordnung derart gewählt, dass die äußeren, den Außenkanten des Förderbandes zugewandten Enden der Leisten gegenüber den in der Mitte des Förderbandes einander zugewandten Enden in Transportrichtung vorauseilen. Diese Leisten sollen die Gutannahme des von den Förderbändern der Seitenabschnitte an das tieferliegende Förderband des Mittenabschnittes abgegebenen Ernteguts verbessern.

Ausgehend von dem vorstehend genannten Stand der Technik ist es die Aufgabe der vorliegenden Erfindung ein Schneidwerk bereitzustellen, welches sich durch eine verbesserte Gutannahme und Gutabführung im Mittenabschnitt auszeichnet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass das Fördermittel zumindest zwei endlos umlaufende Förderbänder umfasst, die unter einem Winkel zur Längsachse des Mittenabschnittes geneigt angeordnet sind. Die geneigte Anordnung der Förderbänder ermöglicht eine Zusammenführung des Erntegutes zur Mitte des Mittenabschnittes hin, so dass sich weniger Erntegut an den Seiten des Mittenabschnitts zurückstaut. Die Übergangsbereiche von den Förderbändern der Seitenabschnitte zu den Förderbändern des Mittenabschnittes werden durch diese Anordnung entlastet, indem das Mitreißen des Ernteguts durch das jeweilige Förderband des angrenzenden Seitenabschnittes zur Unterseite des Schneidwerks hin reduziert wird. Folglich entstehen weniger Schneidwerksverluste. Die Gefahr von Blockaden durch sich aufstauendes Erntegut im Übergangsbereich wird ebenfalls deutlich verringert. Das Erntegut tendiert dazu, in dem Übergangsbereich zwischen den seitwärts umlaufenden Förderbändern und dem quer dazu umlaufenden, tiefergelegenen Förderband eingeklemmt zu werden, was zu einer Blockade des Schneidwerkes führt. Die erfindungsgemäße Anordnung zumindest zweier Förderbänder auf dem Mittenabschnitt führt dazu, dass das von den Seitenabschnitten kommende Erntegut bei der Gutannahme durch die Förderbänder des Mittenabschnittes nicht nahezu rechtwinklig umgelenkt wird, wie dies bei dem Schneidwerk gemäß der US 6,817,166 B2 der Fall ist. Ein weiterer Nachteil des aus der US 6,817,166 B2 bekannten Förderbandes im Mittenbereich ergibt sich aus der zur Förderrichtung geneigten Anordnung der Leisten auf der Förderbandoberfläche. Die Neigung der Leisten bezüglich der Längsachse der Fördervorrichtung kann nur sehr gering ausgeführt sein, da es ansonsten im Bereich der Antriebs- und Umlenkrollen zu Problemen kommt, die zu einer Beschädigung des Förderbandes führen. Denkbar ist auch eine Anordnung zumindest eines weiteren Förderbandes im Mittenbereich des Schneidwerkes, welches zwischen den geneigt angeordnet Förderbändern angeordnet ist.

Bevorzugt sind die zumindest zwei Förderbänder im Wesentlichen V-förmig angeordnet, wobei die Förderbänder in Transportrichtung zusammenlaufen. Dabei schließen die beiden Förderbänder des Mittenabschnittes jeweils den gleichen Winkel mit der Längsachse ein.

Gemäß einer vorteilhaften Weiterbildung kann vorgesehen sein, dass ausgehend vom Messerbalken sich ein einen in seiner Längserstreckung im Wesentlichen keilförmigen Verlauf aufweisendes Bauteil zwischen den Förderbändern erstreckt. Das keilförmige Bauteil deckt den Bereich zwischen den bezüglich der Längsachse des Mittenabschnittes geneigt angeordneten Förderbändern zumindest teilweise ab. Die Oberfläche des keilförmigen Bauteils kann sich zumindest abschnittsweise auf einer Höhe mit der Oberseite der Förderbänder befinden. Dadurch lassen sich ungewollte Ablagerungen von Erntegut auf der Oberfläche des keilförmigen Bauteils zumindest minimieren.

Weiterhin kann das Bauteil einen sich in Transportrichtung der Förderbänder verjüngenden Verlauf aufweisen. Das keilförmige Bauteil sollte im Wesentlichen an den Verlauf der Anordnung der Förderbänder im Mittenabschnitt angepasst sein. Dadurch können offene Bereiche zwischen den Förderbändern im Mittenabschnitt vermieden werden. Auf diese Weise kann das Hindurchtreten von Erntegut insbesondere zwischen die endlos umlaufenden Förderbänder verhindert werden.

Einer vorteilhaften Ausgestaltung zufolge kann das keilförmige Bauteil eine dachförmige Oberfläche aufweisen, welche zu das Bauteil begrenzenden Außenlängskanten hin abfallend ausgeführt ist. Insbesondere kann das keilförmige Bauteil einen dreieckförmigen Querschnitt aufweisen. Hierdurch kann eine Art Abstreifeffekt erreicht werden, da aufgrund der spitz zulaufenden Seitenflächen des keilförmigen Bauteiles das Ablagern oder Anhäufen von Erntegut zumindest erschwert wird. Im Mittenbereich zwischen den Förderbändern vom Schneidwerk aufgenommenes Erntegut gelangt somit in den Annahmebereich zumindest eines der beiden Förderbänder.

Bevorzugt kann das keilförmige Bauteil an seinen dem jeweiligen Förderband zugewandten Außenlängskanten einen sich nach außen erstreckenden Abschnitt aufweisen, welcher die Oberfläche des jeweiligen Förderbandes abschnittsweise überlappt. Der, insbesondere konvexe, Abschnitt dient der Abdichtung des jeweils benachbart angeordneten Förderbandes, um zu verhindern, dass Erntegut zwischen das jeweilige endlos umlaufende Förderband gelangen kann. Der jeweilige Abschnitt kann auch ein im Wesentlichen L-förmiges Profil aufweisen.

Um eine verschleißarme Abdichtung an der Außenlängskante des jeweiligen Abschnittes gegenüber dem überlappten Förderbandabschnitt zu erreichen, kann hierfür zumindest ein aus einem elastischen Material hergestelltes Dichtelement an der dem Förderband zugewandten Seite des jeweiligen Abschnittes angeordnet sein. Das Dichtelement liegt dabei auf der Oberfläche des Förderbandes auf.

Weiterhin kann das Bauteil lösbar an einem Rahmenbauteil des Mittenabschnittes montiert sein. Hierdurch ist eine einfache Austauschbarkeit des keilförmigen Bauteils gewährleistet. Zudem ist eine einfache Zugänglichkeit zu den benachbart zu dem keilförmigen Bauteil angeordneten Förderbändern im Mittenabschnitt gegeben.

Insbesondere kann das jeweilige Förderband zwei parallel zueinander angeordneten Rollen sowie eine zwischen den Rollen angeordnete Spannvorrichtung zur Anpassung des Abstandes der Rollen abschnittsweise umgeben. Durch diese Anordnung der Spannvorrichtung zwischen dem umlaufenden Förderband lässt sich eine bauraumsparende Unterbringung erzielen.

Hierbei kann die Spannvorrichtung einen Betätigungshebel aufweisen, der auf der dem keilförmigen Element zugewandten Seite seitlich über die Außenkante des Förderbandes abschnittsweise hinausragt und sich in einer Verschlussstellung parallel zum Förderband erstreckt.

Eine bevorzugte Weiterbildung kann sein, dass die Förderbänder des Mittenabschnitts unabhängig voneinander antreibbar sind. Mittels einer geeigneten Überwachung der von den Seitenabschnitten des Schneidwerks aufgenommenen Erntegutmengen und einer Ansteuerung der jeweiligen Aktorik der Förderbänder lässt sich auf temporäre Schwankungen bei der Gutannahme durch die Förderbänder im Mittenabschnitt reagieren.

Die vorliegende Erfindung wird nachstehend anhand eines in den Zeichnungen dargestellten Ausführungsbeispieles näher erläutert.

Es zeigen:
- Fig. 1: eine schematische Teilansicht eines Schneidwerkes in Draufsicht;
- Fig. 2: eine perspektivische Detailansicht V des Schneidwerkes gemäß Fig. 1 mit einem einen keilförmigen Verlauf aufweisenden Bauteil;
- Fig. 3: eine perspektivische Ansicht eines Details des Schneidwerkes gemäß Fig. 1 mit einem modifizierten Bauteil;
- Fig. 4: eine perspektivische, teilweise geschnittene Teilansicht eines Mittenabschnittes des Schneidwerks gemäß Fig. 1.

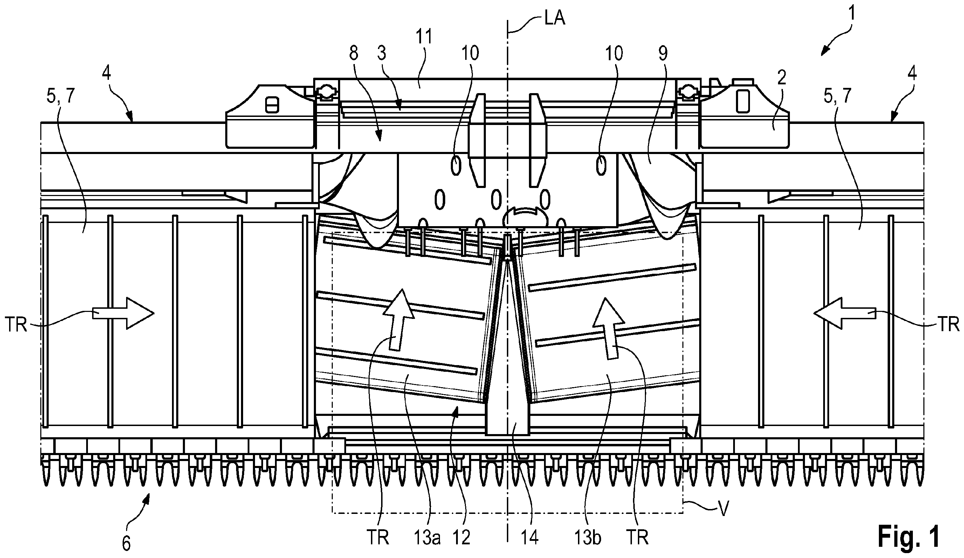

In Fig. 1 ist eine schematische Teilansicht eines Schneidwerkes 1 in Draufsicht dargestellt. Das Schneidwerk 1 ist als ein so genanntes Bandschneidwerk ausgeführt, welches sich durch ein hohes Maß an Flexibilität bei der Anpassung an eine Bodenkontur einer zu bearbeitenden respektive abzuerntenden Fläche aufweist. Das Schneidwerk 1 weist einen Grundrahmen 2 auf, an welchem ein Mittenabschnitt 3 und zumindest zwei benachbart zu dem Mittenabschnitt 3 angeordnete Seitenabschnitte 4 angeordnet sind. An dem Mittenabschnitt 3 und den Seitenabschnitten 4 ist auf der dem Grundrahmen 2 gegenüberliegenden Vorderseite ein Messerbalken 6 angeordnet, der sich im Wesentlichen über die gesamte Breite des Schneidwerkes 1 erstreckt. Weiterhin sind an dem Grundrahmen 2 des Schneidwerkes 1 nicht dargestellte Haspeln angeordnet, die sich über die Breite eines Seitenabschnittes 4 sowie teilweise über die Breite des Mittenabschnittes 3 erstrecken. Die Haspeln dienen der Verbesserung der Annahme des Erntegutes durch den Messerbalken 6.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 mindestens ein endlos umlaufendes Seitenförderband 7 umfasst. Die endlos umlaufenden Seitenförderbänder 7 sind benachbart zu dem Mittenabschnitt 3 angeordnet, um das von dem Messerbalken 6 abgeschnittene Erntegut parallel zu der Längsachse des Schneidwerkes 1 in Richtung des Mittenabschnittes 3 zu transportieren. Im Bereich des Mittenabschnittes 3 wird das Erntegut einer Einzugsvorrichtung 8 zugeführt. Die Einzugsvorrichtung 8 ist als eine antreibbare Einzugswalze 9, die durch Rahmenelemente an dem Grundrahmen 2 gelagert ist, ausgeführt. Die Einzugswalze 9 weist einziehbare Finger 10 auf. Die Einzugsvorrichtung 8 führt das von den endlosen Förderbändern 7 dem Mittenabschnitt 3 seitlich zugeführte Erntegut einer in dem Grundrahmen 2 vorgesehenen, hinter der Einzugswalze 9 befindlichen, Öffnung zu, durch welche das abgeschnittene Erntegut durch einen lediglich andeutungsweise dargestellten Einzugskanal 11 eines Mähdreschers, an dem das Schneidwerk 1 befestigbar ist, dem Mähdrescher zur weiteren Verarbeitung übergeben wird.

Der Mittenabschnitt 3 weist ein Fördermittel 12 auf, welches zumindest zwei endlos umlaufende Förderbänder 13a, 13b umfasst. Mit dem Bezugszeichen TR gekennzeichnete Pfeile deuten die Transport- bzw. Förderrichtung der Förderbänder 13a, 13b an. Die beiden Förderbänder 13a, 13b sind zu einer Längsachse LA des Mittenabschnittes 3 geneigt angeordnet. Die benachbart auf den Seitenabschnitten 4 angeordneten Seitenförderbänder 7 überlappen das jeweilige Förderband 13a, 13b abschnittsweise. Die Anordnung der Förderbänder 13a, 13b ist derart gewählt, dass diese im Wesentlichen V-förmig ist. Dazu sind die beiden Förderbänder 13a, 13b in Transportrichtung TR aufeinander zulaufend angeordnet. Dabei schließt das jeweilige Förderband 13a, 13b mit der Längsachse des Mittenabschnittes 3 einen Winkel α ein, der größer oder gleich 5° beträgt. Diese Anordnung hat den Vorteil, dass das von den Seitenförderbändern 7 kommende Erntegut nicht, wie es aus dem Stand der Technik bekannt ist, beim Übergang auf den Mittenbereich um einen Winkel von 90° umgelenkt werden muss. Die V-förmige Anordnung der Förderbänder 13a, 13b führt zu einer Zusammenführung des Erntegutes in den Mittenbereich des Mittenabschnittes 3, sodass ein Zurückstauen von Erntegut auf dem Mittenabschnitt 3 zu den Seitenförderbändern 7 hin reduziert wird.

Zwischen den Förderbändern 13a, 13b des Mittenabschnittes 3 ist ein einen in seiner Längsrichtung im Wesentlichen keilförmigen Verlauf aufweisendes Bauteil 14 angeordnet. Das Bauteil 14 weist einen sich in Transportrichtung TR der Förderbänder 13a, 13b verjüngenden Verlauf auf. Hierbei erstreckt sich das Bauteil 14 im Wesentlichen zwischen den beiden Förderbändern 13a, 13b, so dass die aufgrund der geneigten Anordnung der beiden Förderbänder 13a, 13b freibleibende Fläche abgedeckt ist. Denkbar ist auch die Anordnung eines weiteren Förderbandes zwischen den beiden V-förmig angeordneten Förderbändern 13a, 13b.

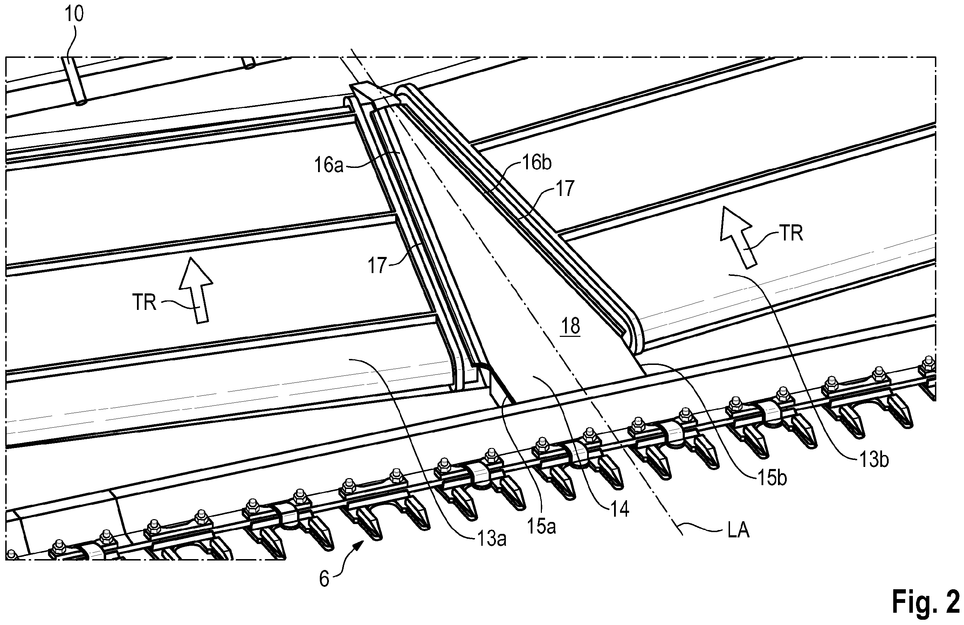

Die Darstellung in Fig. 2 zeigt eine perspektivische Detailansicht V des Schneidwerkes 1 gemäß Fig. 1 mit dem einen keilförmigen Verlauf aufweisenden Bauteil 14. Das Bauteil 14 ist vorzugsweise einteilig ausgeführt. Eine zumindest zweiteilige Ausgestaltung des Bauteils 14 ist ebenfalls denkbar, wobei bei einer zweiteiligen Ausführung des Bauteils 14 die beiden Teile bezüglich der Längsachse LA des Mittenabschnittes 3 spiegelbildlich aufgebaut wären. An seinen dem jeweiligen Förderband 13a, 13b zugewandten Außenlängskanten 15a bzw. 15b weist das Bauteil 14 jeweils einen sich seitlich nach außen erstreckenden Abschnitt 16a bzw. 16b auf. Diese Abschnitte 16a, 16b überlappen die Oberfläche des jeweiligen Förderbandes 13a, 13b abschnittsweise. Dabei können die Abschnitte 16a, 16b gewölbt ausgebildet sein oder ein abgekantetes, insbesondere im Wesentlichen L-förmiges, Profil aufweisen. Wie weiter aus der Fig. 2 ersichtlich ist, weist das Bauteil 14 zwischen den Außenlängskanten 15a bzw. 15b eine ebene Oberfläche 18 auf. Auf der dem Förderband 13a, 13b zugewandten Seite des jeweiligen Abschnittes 16a, 16b ist ein aus einem elastischen Material bestehendes Dichtelement 17 angeordnet.

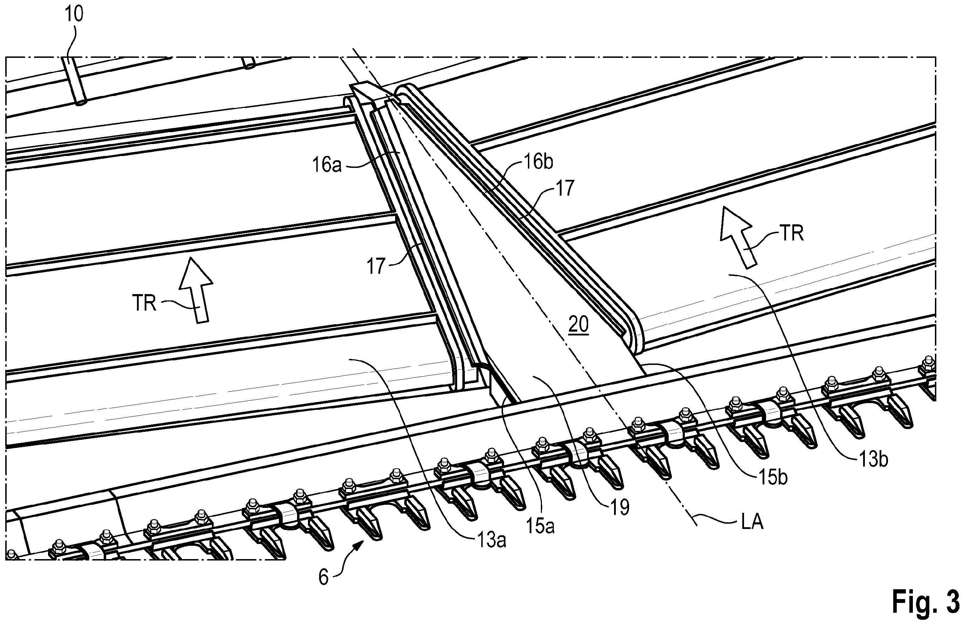

In Fig. 3 ist eine perspektivische Ansicht eines Details des Schneidwerkes 1 gemäß Fig. 1 mit einem modifizierten Bauteil 19 dargestellt. Das Bauteil 19 unterscheidet sich von dem in der Fig. 2 gezeigten Bauteil 14 dadurch, dass es eine dachförmige Oberfläche 20 aufweist, welche zu den Außenlängskanten 15a bzw. 15b abfallend ausgeführt ist. Der Querschnittsverlauf des modifizierten Bauteils 19 ist dabei im Wesentlichen dreieckförmig ausgebildet.

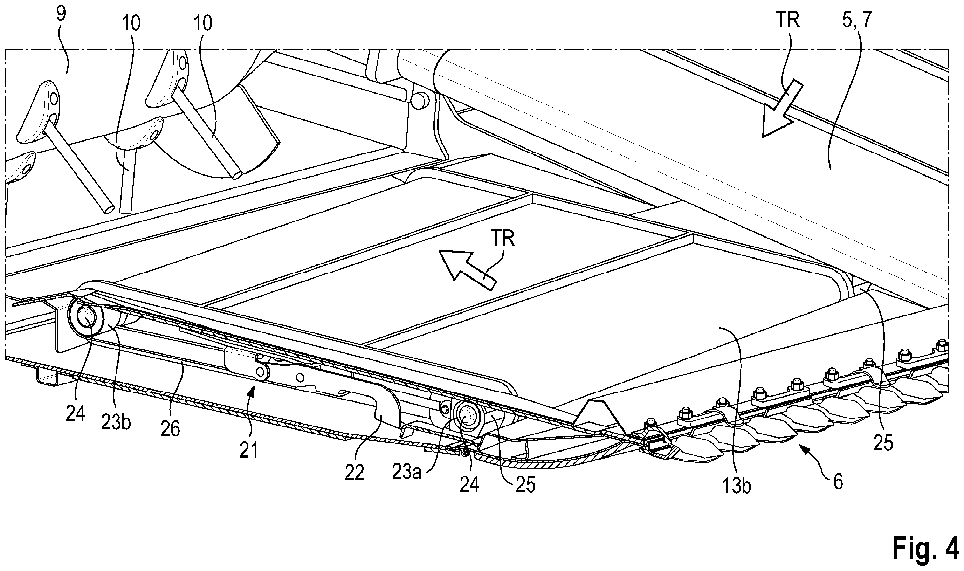

Die Darstellung in Fig. 4 zeigt eine perspektivische, teilweise geschnittene Teilansicht eines Mittenabschnittes des Schneidwerks gemäß Fig. 1. Dargestellt ist in dieser Ansicht nur das eine Förderband 13b. Wegen des symmetrischen Aufbaus der Fördervorrichtung 5 gilt das nachstehend Gesagte entsprechend für das nicht dargestellte Förderband 13a. Die Fördervorrichtung 5 umfasst jeweils paarweise angeordnete, dem Antrieb und der Umlenkung dienende vordere und hintere Rollen 23a, 23b, welche das jeweilige Förderband 13a, 13b umschließt. Die Rollen 23a, 23b weisen jeweils eine Achse 24 auf, welche drehbar in beidseitig des Förderbandes 13b angeordneten Lagerstellen 25 gelagert ist. Die Lagerstellen 25 sind unmittelbar benachbart zu dem Förderband 13b bzw. der Rolle 23a, 23b angeordnet. Die jeweilige Lagerstelle 25 weist ein Gehäuse auf, welches das Förderband 13b im Umlenkbereich der Rolle 23a, 23b abschnittsweise umschließt. Der das Förderband 13b in Umfangsrichtung umschließende Abschnitt des Gehäuses der Lagerstelle 25 dient dabei als Abstreifer, um das Mitführen von Erntematerial durch das Förderband 13b zu vermeiden.

Weiterhin ist aus der Darstellung in Fig. 4 ersichtlich, dass eine Spannvorrichtung 21 vorgesehen ist, mit der die Bandspannung des Förderbandes 13b durch eine Abstandsänderung der Rollen 23a, 23b angepasst beziehungsweise nachgestellt werden kann. Die Funktion der Spannvorrichtung 21 basiert auf einer Kniehebelanordnung. Ein Betätigungshebel 22, der in Fig. 4 in einer Verriegelungsstellung dargestellt ist, dient der Betätigung der Spannvorrichtung 21. Die Anordnung der Spannvorrichtung 21 ist zwischen dem umlaufenden Förderband 13b vorgesehen, was bauraumsparend ist. Der Betätigungshebel 22 ragt auf der dem keilförmigen Bauteil 14 zugewandten Seite seitlich über eine Außenkante 26 des Förderbandes 13b abschnittsweise hinaus. Dabei erstreckt sich der Betätigungshebel 22 in der Verschlussstellung parallel zum Förderband 13b. Um das jeweilige Förderband 13a, 13b nachspannen zu können, lässt sich das Bauteil 14 demontieren. Der dadurch freiliegende Betätigungshebel 22 ist nunmehr durch eine Bedienperson betätigbar, um das Förderband 13b nachzuspannen. Ein weiterer Vorteil ergibt sich daraus, dass die Spannvorrichtung 21 zusammen mit dem jeweiligen Förderband 13a, 13 b als eine Einheit erbaut wird.

### Bezugszeichenliste

| | | | |
|---|---|---|---|
| 1 | Schneidwerk | α | Winkel |
| 2 | Grundrahmen | | |
| 3 | Mittenabschnitt | | |
| 4 | Seitenabschnitte | | |
| 5 | Fördervorrichtung | | |
| 6 | Messerbalken | | |
| 7 | Seitenförderband | | |
| 8 | Einzugsvorrichtung | | |
| 9 | Einzugswalze | | |
| 10 | Einziehbare Finger | | |
| 11 | Einzugskanal | | |
| 12 | Fördermittel | | |
| 13a | Förderband | | |
| 13b | Förderband | | |
| 14 | Bauteil | | |
| 15a | Außenlängskante | | |
| 15b | Außenlängskante | | |
| 16a | Äußerer Abschnitt | | |
| 16b | Äußerer Abschnitt | | |
| 17 | Dichtelement | | |
| 18 | Ebene Oberfläche | | |
| 19 | Bauteil | | |
| 20 | Dachförmige Oberfläche | | |
| 21 | Spannvorrichtung | | |
| 22 | Betätigungshebel | | |
| 23 | Rollen | | |
| 24 | Achse | | |
| 25 | Lagerstelle | | |
| 26 | Außenkante | | |
| TR | Transportrichtung | | |
| LA | Längsachse | | |

## Patentansprüche

1. Schneidwerk (1), umfassend einen an einem Grundrahmen (2) angeordneten Mittenabschnitt (3) und wenigstens zwei benachbart zu dem Mittenabschnitt (3) angeordnete Seitenabschnitte (4), einen sich im Wesentlichen über die Breite des Schneidwerkes (1) erstreckenden Messerbalken (6) sowie zumindest eine hinter dem Messerbalken (6) angeordnete Fördervorrichtung (5), welche von dem Messerbalken (6) abgeschnittenes Erntegut seitwärts in Richtung des Mittenabschnittes (3) transportiert, welcher wenigstens ein quer zur Transportrichtung der Fördervorrichtung (5) förderndes Fördermittel (12) aufweist, wobei das Fördermittel (12) zumindest zwei endlos umlaufende Förderbänder (13a, 13b) umfasst, **dadurch gekennzeichnet, dass** die Förderbänder unter einem Winkel (a) zur Längsachse (LA) des Mittenabschnittes (3) geneigt angeordnet sind.

2. Schneidwerk (1) nach Anspruch 1, **dadurch gekennzeichnet, dass** die zumindest zwei Förderbänder (13a, 13b) im Wesentlichen V-förmig angeordnet sind.

3. Schneidwerk nach einem der vorangehenden Ansprüche, **dadurch gekennzeichnet, dass** ausgehend vom Messerbalken (6) sich ein einen in seiner Längserstreckung im Wesentlichen keilförmigen Verlauf aufweisendes Bauteil (14, 19) zwischen den Förderbändern (13a, 13b) erstreckt.

4. Schneidwerk nach dem Anspruch 3, **dadurch gekennzeichnet, dass** das keilförmige Bauteil (14, 19) einen sich in Transportrichtung (TR) verjüngenden Verlauf aufweist.

5. Schneidwerk nach einem der vorangehenden Ansprüche 3 bis 4, **dadurch gekennzeichnet, dass** das keilförmige Bauteil (19) eine dachförmige Oberfläche (20) aufweist, welche zu das Bauteil (19) begrenzenden Außenlängskanten (15a bzw. 15b) abfallend ausgeführt ist.

6. Schneidwerk nach einem der vorangehenden Ansprüche 3 bis 5, **dadurch gekennzeichnet, dass** das keilförmige Bauteil (14, 19) an seinen dem jeweiligen Förderband (13a, 13b) zugewandten Außenlängskanten (15a, 15b) einen sich seitlich nach außen erstreckenden Abschnitt (16a, 16b) aufweist, welcher die Oberfläche des jeweiligen Förderbandes (13a, 13b) abschnittsweise überlappt.

7. Schneidwerk nach dem Anspruch 6, **dadurch gekennzeichnet, dass** zumindest ein aus einem elastischen Material hergestelltes Dichtelement (17) an der dem Förderband (13a, 13b) zugewandten Seite des jeweiligen Abschnittes (16a, 16b) angeordnet ist.

8. Schneidwerk (1) nach einem der vorangehenden Ansprüche 3-7, **dadurch gekennzeichnet, dass** das keilförmige Bauteil (14, 19) lösbar an einem Rahmenbauteil des Mittenabschnittes (3) montiert ist.

9. Schneidwerk (1) nach einem der vorangehenden Ansprüche, **dadurch gekennzeichnet, dass** das jeweilige Förderband (13a, 13b) zwei parallel zueinander angeordnete Rollen (23a, 23b) sowie eine zwischen den Rollen (23a, 23b) angeordnete Spannvorrichtung (21) zur Anpassung des Abstandes der Rollen (23a, 23b) abschnittsweise umgibt.

10. Schneidwerk (1) dem Anspruch 9, **dadurch gekennzeichnet, dass** die Spannvorrichtung (21) einen Betätigungshebel (22) aufweist, der auf der dem keilförmigen Bauteil (14, 19) zugewandten Seite seitlich über die Außenkante (26) des Förderbandes (13a, 13b) abschnittsweise hinausragt und sich in einer Verschlussstellung parallel zum Förderband (13a, 13b) erstreckt.

11. Schneidwerk (1) nach einem der vorangehenden Ansprüche, **dadurch gekennzeichnet, dass** die Förderbänder (13a, 13b) des Mittenabschnitts (3) unabhängig voneinander antreibbar sind.

## Claims

1. A header (1) including a central portion (3) arranged on a base frame (2) and at least two side portions (4) arranged adjacent to the central portion (3), a cutter bar (6) extending substantially over the width of the header (1) and at least one conveyor apparatus (5) arranged behind the cutter bar (6) and which transports crop material cut by the cutter bar (6) sideways in the direction of the central portion (3) and which has at least one conveyor means (12) conveying transversely to the transport direction of the conveyor apparatus (5), wherein the conveyor means (12) includes at least two endlessly circulating conveyor belts (13a, 13b), **characterised in that** the conveyor belts are arranged inclined at an angle (a) to the longitudinal axis (LA) of the central portion (3).

2. A header (1) according to claim 1 **characterised in that** the at least two conveyor belts (13a, 13b) are arranged substantially in a V-shape.

3. A header according to one of the preceding claims **characterised in that** a component (14, 19) which is substantially wedge-shaped in its longitudinal extent extends between the conveyor belts (13a, 13b) from the cutter bar (6).

4. A header according to claim 3 **characterised in that** the wedge-shaped component (14, 19) is of a tapering configuration in the transport direction (TR).

5. A heading according to one of preceding claims 3 or 4 **characterised in that** the wedge-shaped component (19) has a roof-shaped surface (20) which falls away relative to outer longitudinal edges (15a and 15b) defining the component (19).

6. A header according to one of preceding claims 3 to 5 **characterised in that** at its outer longitudinal edges (15a, 15b) that are towards the respective conveyor belt (13a, 13b) the wedge-shaped component (14, 19) has a laterally outwardly extending portion (16a, 16b) which portion-wise overlaps the surface of the respective conveyor belt (13a, 13b).

7. A header according to claim 6 **characterised in that** at least one sealing element (17) made from an elastic material is arranged at the side of the respective portion (16a, 16b), that is towards the conveyor belt (13a, 13b).

8. A header (1) according to one of preceding claims 3 to 7 **characterised in that** the wedge-shaped component (14, 19) is mounted releasably to a frame component of the central portion (3).

9. A header (1) according to one of the preceding claims **characterised in that** the respective conveyor belt (13a, 13b) has two rollers (23a, 23b) arranged in mutually parallel relationship and a tensioning device (21) arranged between the rollers (23a, 23b) for adjusting the spacing of the rollers (23a, 23b).

10. A header (1) according to claim 9 **characterised in that** the tensioning device (21) has an actuating lever (22) which on the side towards the wedge-shaped component (14, 19) projects portion-wise laterally beyond the outer edge (26) of the conveyor belt (13a, 13b) and extends in a closure position parallel to the conveyor belt (13a, 13b).

11. A header (1) according to one of the preceding claims **characterised in that** the conveyor belts (13a, 13b) of the central portion (3) are drivable independently of each other.

## Revendications

1. Tablier de coupe (1) comprenant une portion centrale (3) disposée sur un châssis de base (2) et au moins deux portions latérales (4) disposées au voisinage de la portion centrale (3), une barre porte-lames (6) s'étendant sensiblement sur la largeur du tablier de coupe (1), ainsi qu'au moins un dispositif de convoyage (5) qui est disposé derrière la barre porte-lames (6) et qui transporte du produit récolté, coupé par la barre porte-lames (6), latéralement en direction de la portion centrale (3), laquelle comporte au moins un moyen de convoyage (12) convoyant transversalement à la direction de transport du dispositif de convoyage (5), le moyen de convoyage (12) comprenant au moins deux bandes de convoyage à défilement continu (13a, 13b), **caractérisé en ce que** les bandes de convoyage sont disposées de manière inclinée selon un angle (a) par rapport à l'axe longitudinal (LA) de la portion centrale (3).

2. Tablier de coupe (1) selon la revendication 1, **caractérisé en ce que** les au moins deux bandes de convoyage (13a, 13b) sont disposées sensiblement en forme de V.

3. Tablier de coupe selon une des revendications précédentes, **caractérisé en ce qu'**à partir de la barre porte-lames (6) s'étend, entre les bandes de convoyage (13a, 13b), un composant (14, 19) présentant un tracé sensiblement cunéiforme dans son extension longitudinale.

4. Tablier de coupe selon la revendication 3, **caractérisé en ce que** le composant cunéiforme (14, 19) présente un tracé qui se rétrécit dans la direction de transport (TR).

5. Tablier de coupe selon une des revendications précédentes 3 à 4, **caractérisé en ce que** le composant cunéiforme (19) présente une surface supérieure en forme de toit (20) qui est conçue en descente vers des bords longitudinaux extérieurs (15a respectivement 15b) limitant le composant (19).

6. Tablier de coupe selon une des revendications précédentes 3 à 5, **caractérisé en ce que** le composant cunéiforme (14, 19) comporte, sur ses bords longitudinaux extérieurs (15a, 15b) tournés vers la bande de convoyage respective (13a, 13b), une portion (16a, 16b) qui s'étend latéralement vers l'extérieur et qui chevauche par portions la surface supérieure de la bande de convoyage respective (13a, 13b).

7. Tablier de coupe selon la revendication 6, **caractérisé en ce qu'**au moins un élément d'étanchéité (17) fabriqué en matériau élastique est disposé sur le côté de la portion respective (16a, 16b) tourné vers la bande de convoyage (13a, 13b) .

8. Tablier de coupe (1) selon une des revendications précédentes 3 à 7, **caractérisé en ce que** le composant cunéiforme (14, 19) est monté de façon démontable sur un composant de cadre de la portion centrale (3).

9. Tablier de coupe (1) selon une des revendications précédentes, **caractérisé en ce que** la bande de convoyage respective (13a, 13b) entoure par portions deux rouleaux (23a, 23b) disposés parallèlement l'un à l'autre ainsi qu'un dispositif de tension (21) disposé entre les rouleaux (23a, 23b) pour adapter l'écartement des rouleaux (23a, 23b).

10. Tablier de coupe (1) selon la revendication 9, **caractérisé en ce que** le dispositif de tension (21) comporte un levier d'actionnement (22) qui, sur le côté tourné vers le composant cunéiforme (14, 19), dépasse latéralement par portions du bord extérieur (26) de la bande de convoyage (13a, 13b) et, dans une position fermée, s'étend parallèlement à la bande de convoyage (13a, 13b).

11. Tablier de coupe (1) selon une des revendications précédentes, **caractérisé en ce que** les bandes de convoyage (13a, 13b) de la portion centrale (3) sont entraînables indépendamment l'une de l'autre.
